# EUROPEAN PATENT APPLICATION

(11) **EP 1 645 753 A2**
(43) Date of publication of application: **12.04.2006**
(21) Application number: 05021824.7
(22) Date of filing: 06.10.2005
(51) Int. Cl.: F03D 3/04, F03D 3/00

(54) **Wind-guiding apparatus for a wind power generator**

(30) Priority: 10.10.2004 CN 200420096440 U; 01.07.2005 CN 200520112182 U
(71) Applicant: Yeh, Don-Fong, Jhongshan Taipei City 104 (TW)
(72) Inventor: Yeh, Don-Fong, Jhongshan District Taipei City 104 (TW); Tsai, Kun-Lung, Annan District Tainan City (TW)
(74) Representative: TER MEER - STEINMEISTER & PARTNER GbR

(57) **Abstract**

A wind-guidance enhancing apparatus for a wind power generator includes a support stage (2); an impeller stage (3) including at least one blade (32), and a wind-guidance unit (4) for guiding wind to the impeller stage (3). The wind-guidance unit (4) includes a plurality of wind-guidance plates (41) having wind-guidance faces (410), wind-guidance gates (42), and wind-guidance runners (44) defined between adjacent wind-guidance faces and being shrunk toward the impeller stage (3). The wind-guidance gate (42) is designed to be movable to adjust the width and flowing direction of outlets of the wind-guidance runners (44). Moreover, the wind-guidance enhancing apparatus further includes at least one gutter plate and the wind-guidance plates (41) are arranged corresponding to a reference plate to enhance wind capturing angle.

## Description

### BACKGROUND OF THE INVENTION

### 1. Field of the Invention

The present invention relates to, especially to a wind-guidance enhancing apparatus, especially to a wind-guidance enhancing apparatus to facilitate the conversion of dynamic power of wind into electrical power.

### 2. Description of Prior Art

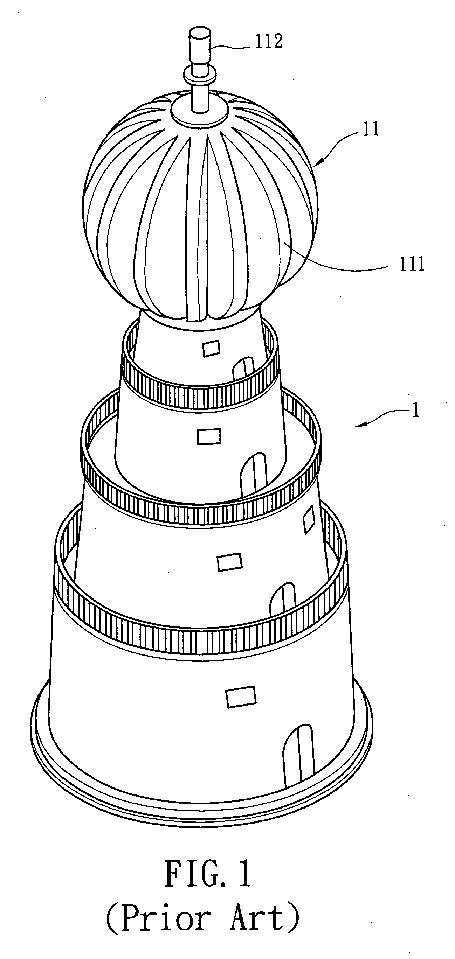

Wind power generation is a green power source with environment concern and free of contamination. Fig. 1 shows a schematic view of a prior art wind power generator 1, which comprises a support stage 12, and an impeller 11 rotatably arranged on the support stage 12. The impeller 11 comprises a rotatably axial shaft 112 in the impeller 11 and a plurality of blades 111 extended outward from the axial shaft 112. The axial shaft 112 is connected to the rotation shaft (not shown) of an impeller stage 3 power generator (not shown), thus driving the power generator by wind.

In above-mentioned prior art wind power generator 1, the power generator (not shown) can be driven by the wind force. However, the performance of the prior art wind power generator might be degraded by uncertainty in wind direction and strength. Moreover, the impeller 11 is generally in rounded shape and the composite force can be very small. The other power generator using liquid is water power generator, which has similar difficulty as the wind power generator.

### SUMMARY OF THE INVENTION

The present invention is intended to provide a wind-guidance enhancing apparatus to enhance the utilization efficiency for wind.

Accordingly, the present invention provides a wind-guidance enhancing apparatus, which comprises a support stage, an impeller stage rotatably arranged on a rotation shaft and mounted on the support stage. According to one aspect of the present invention, the wind-guidance enhancing apparatus further comprises a first wind-guidance unit arranged on the support stage. The first wind-guidance unit comprises a plurality of wind-guidance plates arranged around a circular contour of the impeller stage and having two wind-guidance faces, and wind-guidance runners defined between adjacent wind-guidance faces. The windoutlet direction of the wind-guidance runner faces the impeller stage. The wind-guidance runners are arranged along circumference of the impeller stage in clockwise or counterclockwise direction to facilitate the windguidance.

According to another aspect of the present invention, the first wind-guidance unit comprises a plurality of wind-guidance plates arranged around a circular contour of the impeller stage and having one wind-guidance face, a plurality of wind-guidance gates separated with the wind-guidance plates and comprising a wind-guidance face, and wind-guidance runners defined between adjacent wind-guidance faces and be shrunk toward the impeller stage. The windoutlet direction of the wind-guidance runner are near tangent line of the blade to enhance windpressure, especially to the blade.

According to still another aspect of the present invention, the wind-guidance enhancing apparatus comprises a support stage, an impeller stage and a first wind-guidance set. The first wind-guidance set comprises reference plate, a plurality of wind-guidance plates spaced on both sides of the reference plate and slightly toward the first wind-guidance set, wind-guidance gates spaced with the wind-guidance plates and connected to the adjacent wind-guidance plate at outer end thereof and having a wind-guidance face, a plurality of wind-guidance runners defined by the wind-guidance face, reference plate, and adjacent wind-guidance plates, and shrunk toward the impeller stage. The wind-guidance runners are such arranged that the reference plate, the wind-guidance plates and the wind-guidance gates are located at circular contour around the impeller stage. The wind-guidance runners are arranged on support stage. The outlet of the wind-guidance runner is preferably near the tangent line of the rotation of the blade. The wind-guidance plates are arranged toward outer side to enhance wind capturing angle.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a schematic view of a prior art wind power generator.
Fig. 2 shows an exploded view of the wind-guidance enhancing apparatus according to a first preferred embodiment of the present invention.
Fig. 3 shows a perspective view of the wind-guidance enhancing apparatus according to a first preferred embodiment of the present invention.
Fig. 4 shows a top view of the wind-guidance enhancing apparatus according to a first preferred embodiment of the present invention.
Fig. 5 is a top view similar to Fig. 4 for showing the state of the wind-guidance enhancing apparatus driven by wind.
Fig. 6 is a top view similar to Fig. 5 with different wind direction.
Fig. 7 is a top view similar to Fig. 5 with different wind direction.
Fig. 8 is a top view similar to Fig. 3 to show the wind-guidance enhancing apparatus according to a second preferred embodiment of the present invention.
Fig. 9 shows an exploded view of the wind-guidance enhancing apparatus according to a third preferred embodiment of the present invention.
Fig. 10 shows a top view of the wind-guidance enhancing apparatus according to a third preferred embodiment of the present invention for assembling.
Fig. 11 shows a partial sectional view of the wind-guidance enhancing apparatus according to a third preferred embodiment of the present invention, wherein sliding bolt and lower support are shown.
Fig. 12 shows a partial sectional view similar to that of Fig. 11, wherein sliding bolt and lower support are shown.
Fig. 13 shows a top view of the wind-guidance enhancing apparatus according to a third preferred embodiment of the present invention.
Fig. 14 shows a partially enlarged view of the third preferred embodiment of the present invention, wherein the first wind-guidance unit is shown.
Fig. 15 shows a partially exploded view of the third preferred embodiment of the present invention, wherein the first wind-guidance unit is shown.
Fig. 16 shows a partially enlarged view similar to Fig. 14, wherein the first wind-guidance unit is in a closed position.
Fig. 17 shows a top view of the wind-guidance enhancing apparatus according to a fourth preferred embodiment of the present invention.
Fig. 18 shows a top view similar to Fig. 17, wherein the first wind-guidance unit is in a closed position.
Fig. 19 shows a top view of the wind-guidance enhancing apparatus according to a fifth preferred embodiment of the present invention.
Fig. 20 shows a top view similar to Fig. 13, which shows the wind-guidance enhancing apparatus according to a sixth preferred embodiment of the present invention.

### DETAILED DESCRIPTION OF THE PRESENT INVENTION

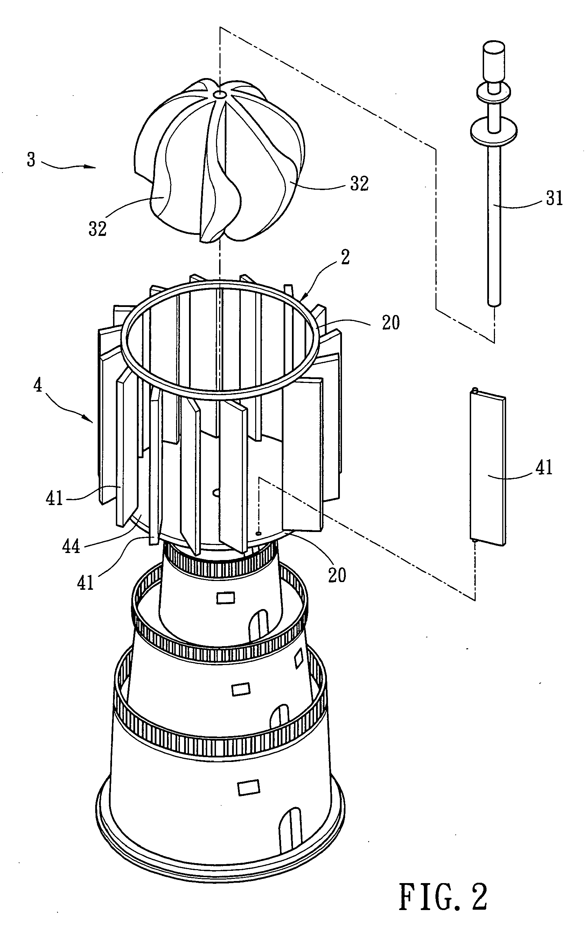

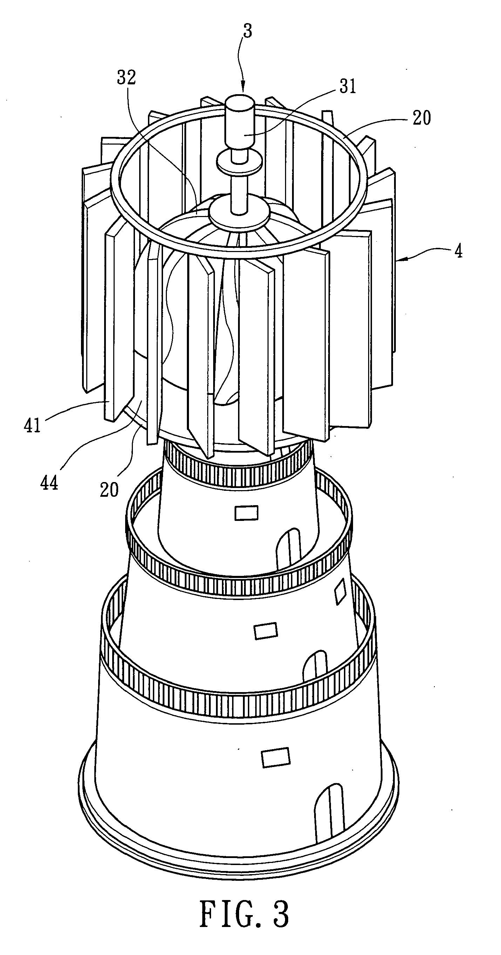

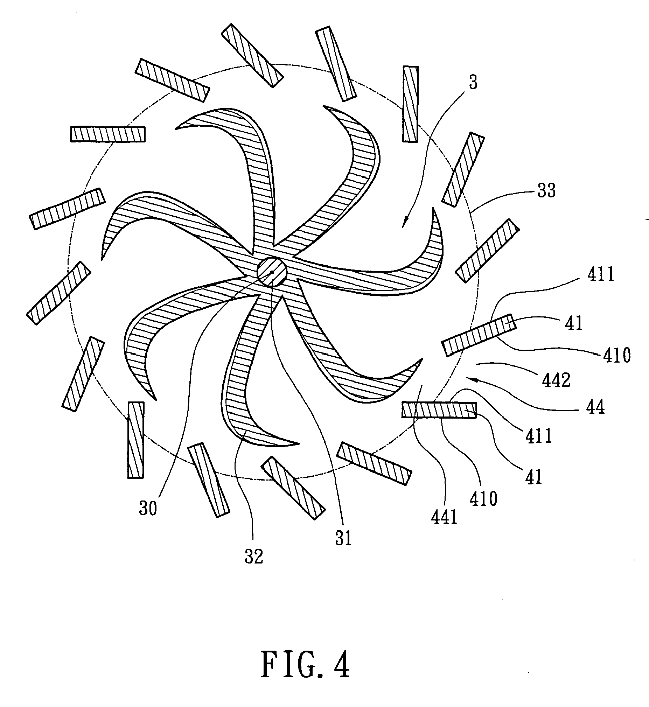

With reference to Figs. 2, 3 and 4, the wind-guidance enhancing apparatus according to a first preferred embodiment of the present invention is depicted. The wind-guidance enhancing apparatus is mounted on a base of a wind power generator and comprises a support stage 2, an impeller stage 3 rotatably arranged on a rotation shaft 30 and mounted on the base and a first wind-guidance unit 4 arranged on the support stage 2 and around the rotation shaft 30. The support stage 2 comprises two annulus rings 20 arranged on upper and lower sides. The impeller stage 3 comprises an impeller axis 31 and a plurality of blades 32 around the impeller axis 31. The first wind-guidance unit 4 is arranged along a circular contour 33 around the impeller stage 3 and comprises a plurality of wind-guidance plates 41 arranged between the annulus rings 20, and a plurality of wind-guidance runners 44 each defined between two adjacent wind-guidance plates 41. Each of the wind-guidance plates 41 comprises first wind-guidance face 411 and a second wind-guidance face 410 opposite to the first wind-guidance face 411. The wind-guidance runner 44 is defined between the first wind-guidance face 411 and the second wind-guidance face 410 of two adjacent wind-guidance plates 41. Each of the wind-guidance runners 44 comprises a shrinking end 441 near the impeller stage 3 and forming a runner outlet, and a widen end 442 near the outer peripheral of the annulus rings 20 and forming a runner inlet.

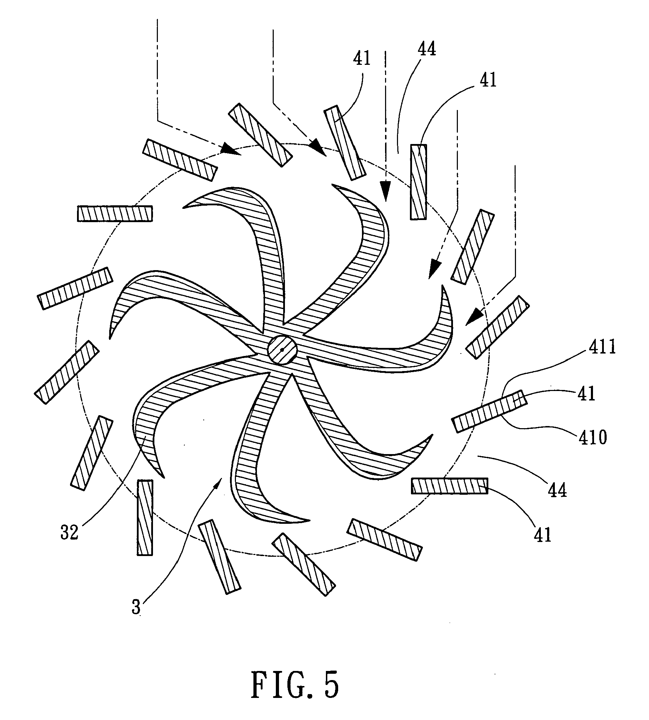

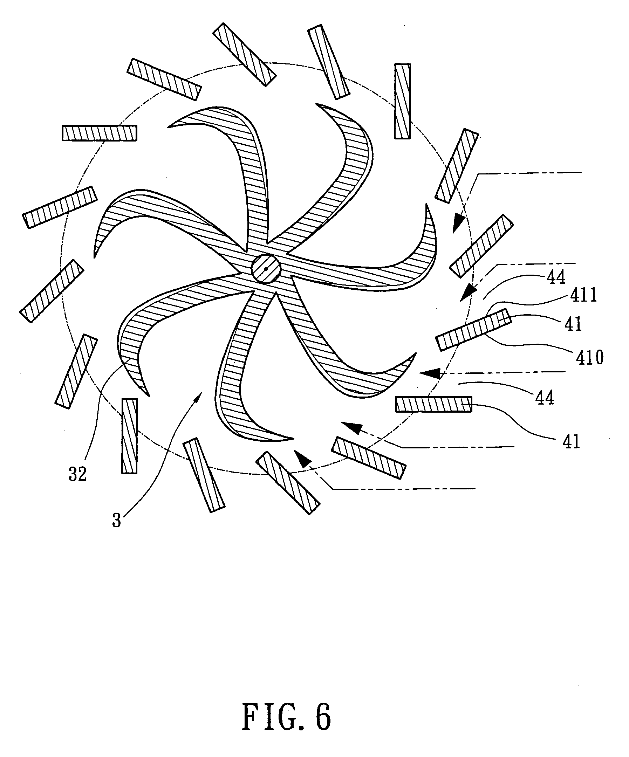

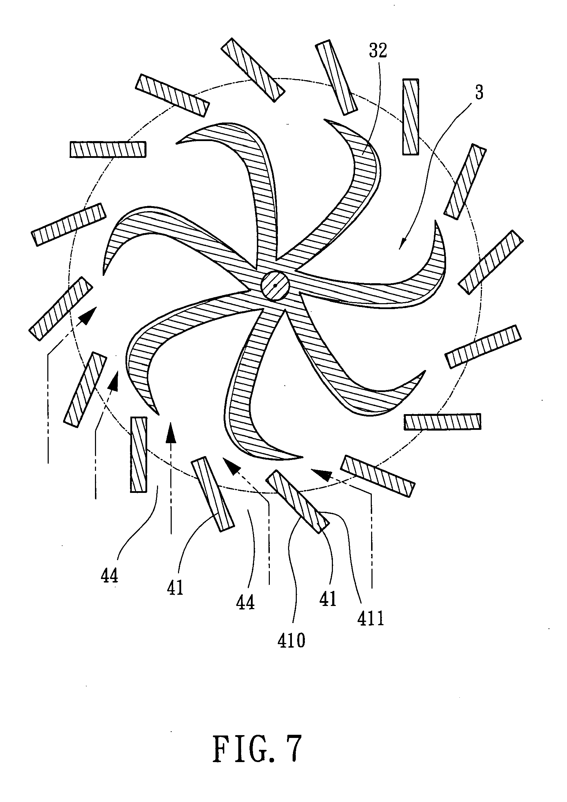

The wind-guidance runners 44 are defined by the wind-guidance plates 41 along the circular contour 33 around the impeller stage 3 and have the design of shrinking end 441 and widen end 442. Therefore, wind can be efficiently guided to the impeller stage 3 and pressure enhancement can be provided to the blades 32 of the impeller stage 3. With reference to Figs. 5, 6, and 7, the wind-guidance enhancing apparatus according to a first preferred embodiment of the present invention can drain liquid along various directions. Moreover, the first wind-guidance face 411 and the second wind-guidance face 410 according to the first preferred embodiment of the present invention can also be designed in curved shape.

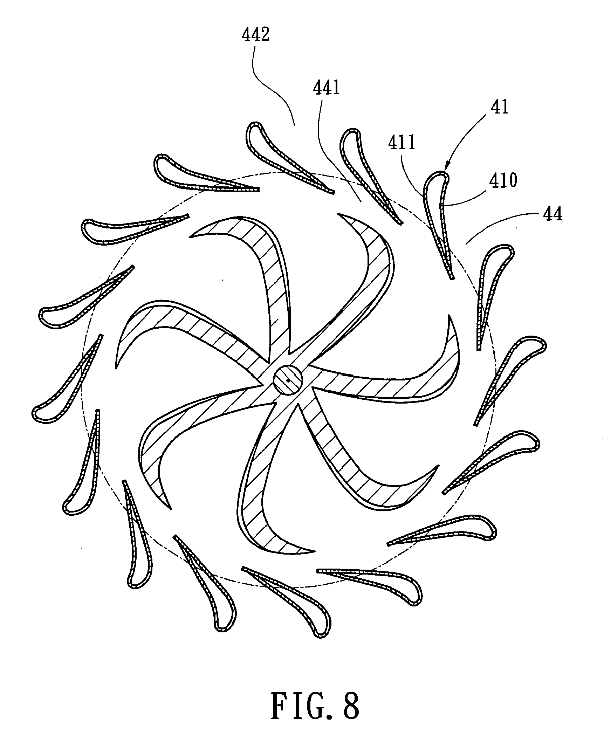

Fig. 8 shows the wind-guidance enhancing apparatus according to a second preferred embodiment of the present invention. The wind-guidance enhancing apparatus in the second preferred embodiment is similar to that of the first preferred embodiment. The shrinking end 441 of the wind-guidance runner 44 is smaller than the widen end 442 of the inlet. The difference is that the cross-section of the radial inner end of the wind-guidance plate 41 is smaller than the radial outer end to have wider-inlet and smaller outlet fashion.

Each of the wind-guidance plates 41 also comprises a first wind-guidance face 411 and a second wind-guidance face 410. Moreover, a wind-guidance runner 44 is also defined between the first wind-guidance face 411 and the second wind-guidance face 410 of two adjacent wind-guidance plates 41. The first wind-guidance face 411 and the second wind-guidance face 410 of the same wind-guidance plate 41 are separated near the impeller stage 3 and become closer as they extend outward.

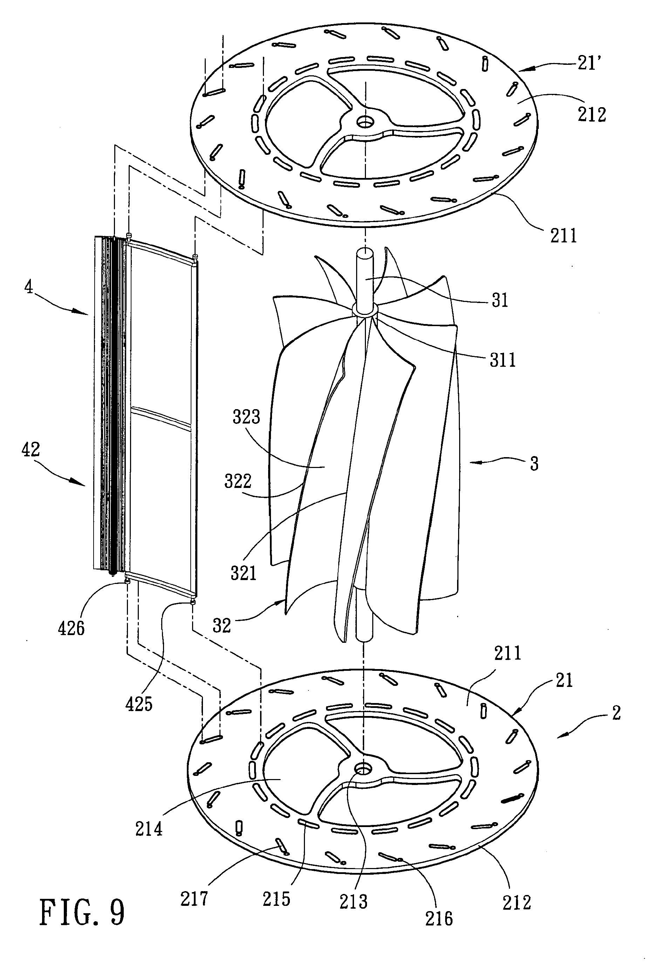

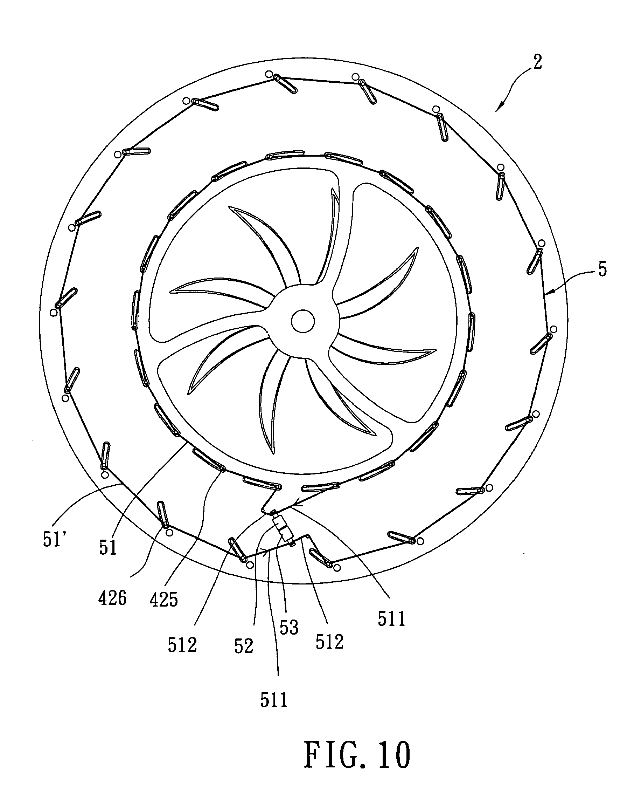

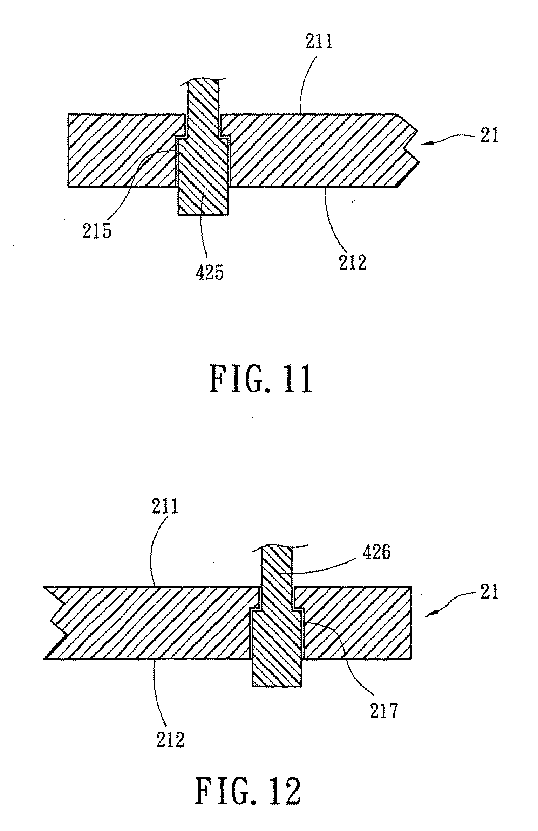

Figs. 9 to 12 show the wind-guidance enhancing apparatus according to a third preferred embodiment of the present invention. The wind-guidance enhancing apparatus according to the third preferred embodiment of the present invention comprises a support stage 2, an impeller stage 3, a first wind-guidance unit 4 and an adjusting mechanism 5 to adjust the angle of the first wind-guidance unit 4. The support stage 2 comprises a disk-shaped lower support 21 and an upper support 21' parallel to the lower support 21. The lower support 21 comprises a mounting face 211 toward the upper support 21', a back face 212 parallel to the mounting face 211, a central hole 213 through the mounting face 211 and the back face 212 and located at the center of the lower support 21, a plurality of through holes 214 around the central hole 213, a plurality of annulus guiding holes 215 around the through holes 214 and through the lower support 21 and the upper support 21', sliding guiding hole 217 slantingly around the guiding holes 215 and through the lower support 21 and the upper support 21' and a plurality of axial holes 216 near the slantingly sliding guiding hole 217. In the preferred embodiment of the present invention, the lower support 21 and the upper support 21' have similar structure except that the mounting face 211 of the upper support 21' faces the lower support 21 and the back face 212 of the upper support 21' faces upward. Moreover, the guiding holes 215 and the slantingly sliding guiding hole 217 on the mounting face 211 have smaller diameter than those on the back face 212 as shown in Figs. 11 and 12.

In this preferred embodiment of the present invention, the impeller stage 3 comprises an impeller shaft 31 rotatably arranged between the central holes 213 of the lower support 21 and the upper support 21', and a plurality of blades 32 axially extended from the impeller shaft 31. Each of the blades 32 comprises a root 321 connected to surface 311 of the impeller shaft 31, a guiding section 322 away from the impeller shaft 31 and a wind reception section 323.

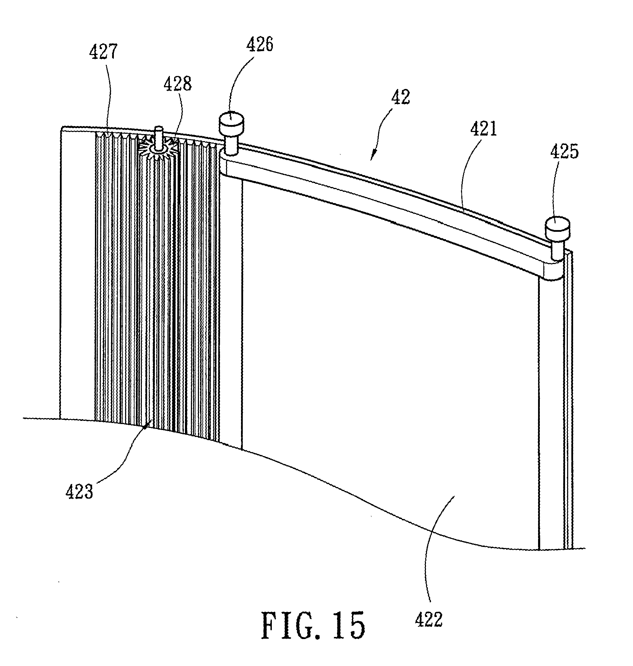

With reference to Figs. 9, 13, 14, 15, the first wind-guidance unit 4 is arranged between the mounting faces 211 of the upper support 21' faces the lower support 21 and comprises a plurality of wind-guidance plates 41 arranged between the mounting faces 211, a plurality of wind-guidance gates 42 pivotally arranged on the mounting faces 211 and corresponding to the axial holes 216, and wind-guidance runners 44 between adjacent the wind-guidance plates 41 and the wind-guidance gates 42. Each of the wind-guidance plates 41 comprises a first wind-guidance face 411 facing the wind-guidance runner 44, wherein the extending direction of the first wind-guidance face 411 toward the impeller stage 3 is between the rotation shaft 30 and a tangent line of the rotation of the impeller stage 3, preferably near the tangent line of the rotational contour of the blade 32.

The wind-guidance gates 42 are arranged between the corresponding axial holes 216 and the guiding holes 215 and the slantingly sliding guiding hole 217 with changeable angle. The position of the wind-guidance gates 42 are changed by the adjusting mechanism 5. Each of the wind-guidance gates 42 comprises a gate section 421 toward the wind-guidance runner 44, a limiting section 422 toward the wind-guidance plate 41, a clamping section 423 facilitating the gate section 421 to move, a limiting plate 420 extending from axial outer end of the wind-guidance plate 41 to inner side, and a telescopic space 429 between the limiting plate 420 and the wind-guidance plate 41. The gate section 421 comprises a third wind-guidance face 424 facing the wind-guidance runner 44. The limiting plate 420 comprises a fourth wind-guidance face 4201 facing the wind-guidance runner 44. The third wind-guidance face 424 and the fourth wind-guidance face 4201, together with the first wind-guidance face 411 have an including angle smaller than 90 degree. The extension lines of the third wind-guidance face 424 and the fourth wind-guidance face 4201 do not pass the rotation shaft 30 and closer to the tangent line of the blade 32. The limiting section 422 comprises two annulus sliding bolts 425 near the impeller stage 3 and projecting toward the lower support 21 and the upper support 21', and two slanting sliding bolts 426 near the telescopic space 429 and projecting toward the lower support 21 and the upper support 21'. The annulus sliding bolts 425 are inserted into the annulus sliding holes 215 of the lower support 21 and the upper support 21', as shown in Fig. 11. The two slanting sliding bolts 426 are inserted into the slanting sliding holes 217 of the lower support 21 and the upper support 21', as shown in Fig. 12. The annulus sliding bolts 425 and the slanting sliding bolts 426 are T-shaped positioning bolts with enlarged tail. The clamping section 423 comprises a flexible engaging part 427 extending from the gate section 421 toward the telescopic space 429, and a rotation gear wheel 428 arranged in the telescopic space 429 and engaged with the flexible engaging part 427. The axial end of the wind-guidance gate 42 is movably arranged on the wind-guidance plate 41.

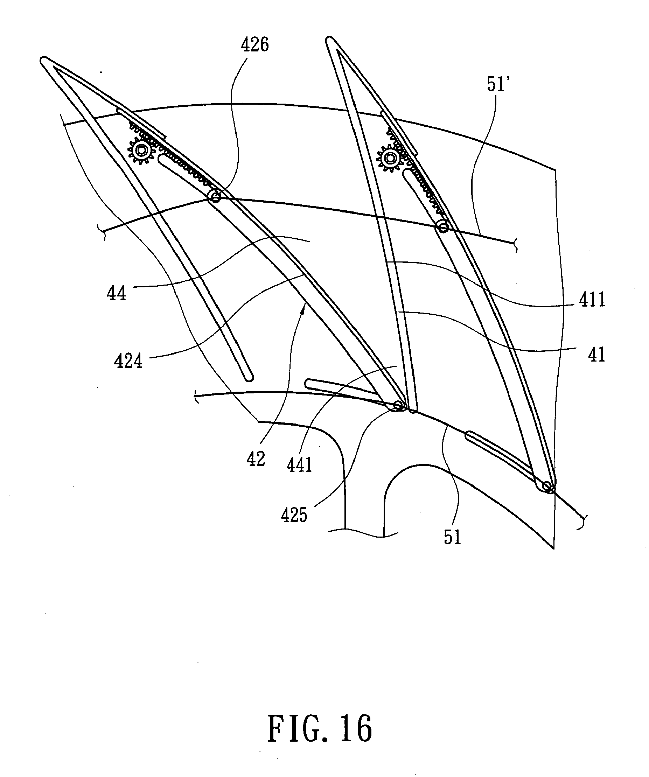

With reference to Figs. 9, 10 and 16, the adjusting mechanism 5 is mounted on the back face 212 of the upper support 21' and is functioned to drive the wind-guidance gate 42 of the first wind-guidance unit 4 and changes the mounting angle of the wind-guidance gate 42. The adjusting mechanism 5 comprises a link cord 51 connected to the annulus sliding bolt 425 of the wind-guidance gate 42, a link cord 51' connected to the slanting sliding bolt 426 of the wind-guidance gate 42, and two motors 52, 53 connected to cord ends 511 and 512 of the link cords 51 and 51'. When the shaft of the motors 52, 53 rotate in clockwise direction, the link rod 51 can be rotates in clockwise direction. The annulus sliding bolt 425 of the wind-guidance gate 42 will be driven by the link rod 51 to move inward axially to the wind-guidance plate 41. Therefore, the including angle between the first wind-guidance face 411 and the third wind-guidance face 424 is widened. As shown in Fig. 16, when the axial inner end of the wind-guidance gate 42 is close to the axial inner end of the wind-guidance plate 41, the shrinking end 441 (outlet) of the wind-guidance runner 44 is closed to maintain the wind-guidance enhancing apparatus. On the contrary, when the shaft of the motors 52, 53 rotate in counterclockwise direction, the link rod 51 can be rotates in clockwise direction. The annulus sliding bolt 425 of the wind-guidance gate 42 will be driven by the link rod 51' to move away from the inner end of the wind-guidance plate 41. The wind-guidance gate 42 is rotated to have smaller including angle. Therefore, the outlet of the wind-guidance runner 44 can be controlled with the flowing direction, the width and open/closing thereof. Moreover, the adjusting mechanism 5 can be adapted to fit arbitrary design of the clamping section 423, which will not be described in detail here.

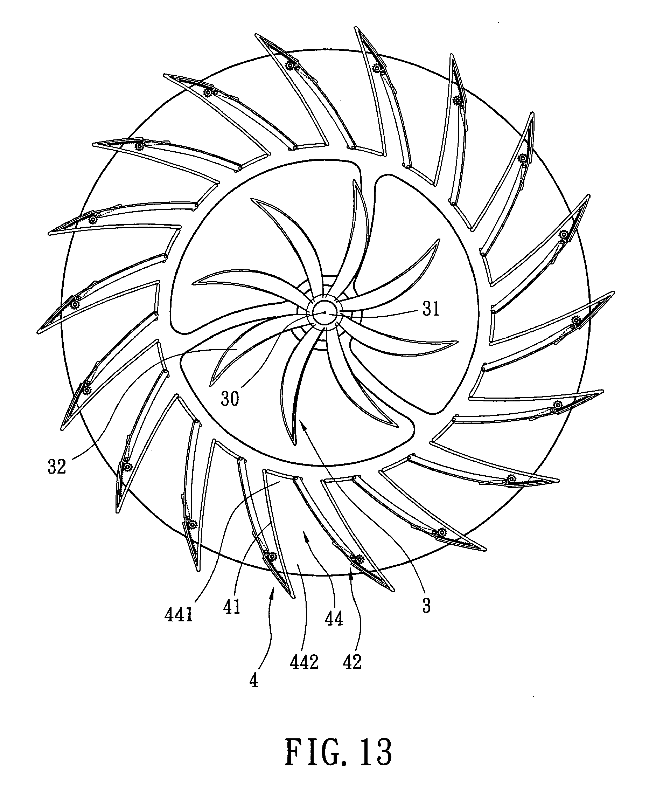

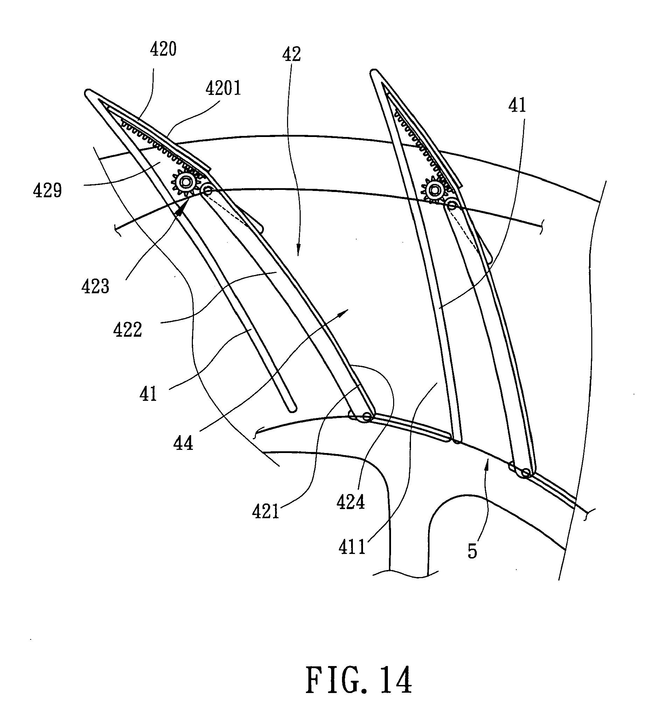

With reference to Figs. 13 and 14, during the use of the wind-guidance enhancing apparatus according to the third preferred embodiment of the present invention, wind is constrained by the first wind-guidance face 411 and the third wind-guidance face 424 and flows to the widen end 442 of the wind-guidance runner 44, and then flows to the impeller stage 3 through the shrinking end 441. The outlet of the wind-guidance runner 44 is extended close to the tangent direction of the contour of the blade 32. Therefore, the optimal acting direction for the wind is on the blade 32. The impeller stage 3 is rotated and a power generator (not shown) linked to the impeller axis 31 is driven to rotate. The runner volume is decreasing when the wind passes the wind-guidance runner 44, the wind will be compressed to spray on the impeller stage 3 with larger pressure to enhance momentum. Moreover, the wind flowed from the wind-guidance runner 44 to the impeller stage 3 will not have destructive interaction with each other. The wind-guidance enhancing apparatus according to the present invention can be stacked in operation. The adjusting mechanism 5 according to the third preferred embodiment of the present invention can also be used for the first and the second preferred embodiments of the present invention to adjust the angle of the wind-guidance plate 41.

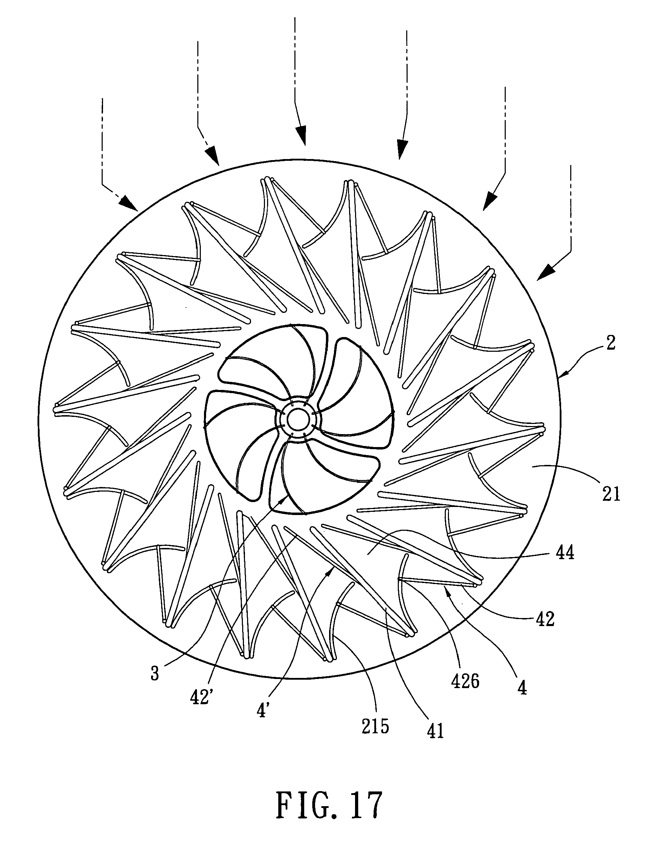

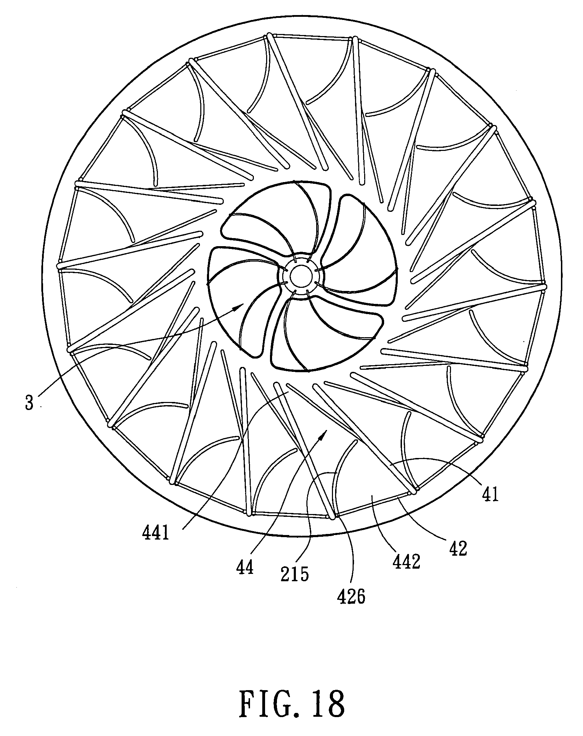

With reference to Figs. 17 and 18, the wind-guidance enhancing apparatus according to the fourth preferred embodiment of the present invention comprises a support stage 2, an impeller stage 3, and a first wind-guidance unit 4 around the impeller stage 3. The support stage 2 also comprises a lower support 21 and an upper support (not shown). A plurality of arc sliding holes 215 are defined on the lower support 21 and the upper support. The first wind-guidance unit 4 comprises a plurality of wind-guidance plates 41 fixed on the support stage 2, a plurality of wind-guidance gates 42 fixed on the support stage 2, and a plurality of wind-guidance runners 44 between the wind-guidance plates 41 and the wind-guidance gates 42. The wind-guidance gate 42 comprises slanting sliding bolts 426 movable in the arc sliding holes 215. One inner end of the wind-guidance gate 42 can be moved toward or away from corresponding wind-guidance plate 41. The axial outer end of the wind-guidance gate 42 is in pivotal state such that the wind-guidance gate 42 can adjust the width and flowing direction of the wind-guidance runner 44. The wind-guidance enhancing apparatus according to the fourth preferred embodiment of the present invention is different to the third preferred embodiment in that the wind-guidance enhancing apparatus further comprises a second wind-guidance unit 4', which comprises a wind-guidance gate 42' near the impeller stage 3. The wind-guidance gate 42' and the wind-guidance gate 42 of the first wind-guidance unit 4 are arranged on the same wind-guidance plate 41 and on the same circumference for the same center.

The wind-guidance gate 42' can be adjusted by an adjusting mechanism similar to that in the third preferred embodiment. The wind-guidance gate 42 and the wind-guidance gate 42' are swung and slid to control the width and flow direction of the wind-guidance runner 44 to enhance wind pressure. Therefore, the ejecting pressure of the wind toward the impeller stage 3 can be enhanced. As shown in Fig. 18, when the wind-guidance enhancing apparatus according to the preferred embodiment encounters gust or is in repair, the slanting sliding bolts 426 in the wind-guidance gate 42 are moved toward axial outer end of the wind-guidance plate 41 to close the wind-guidance runner 44. The wind-guidance enhancing apparatus according to the preferred embodiment can close the widen end 442 or the shrinking end 441. The third preferred embodiment provides straight-line adjustment and the fourth preferred embodiment provides curved line adjustment.

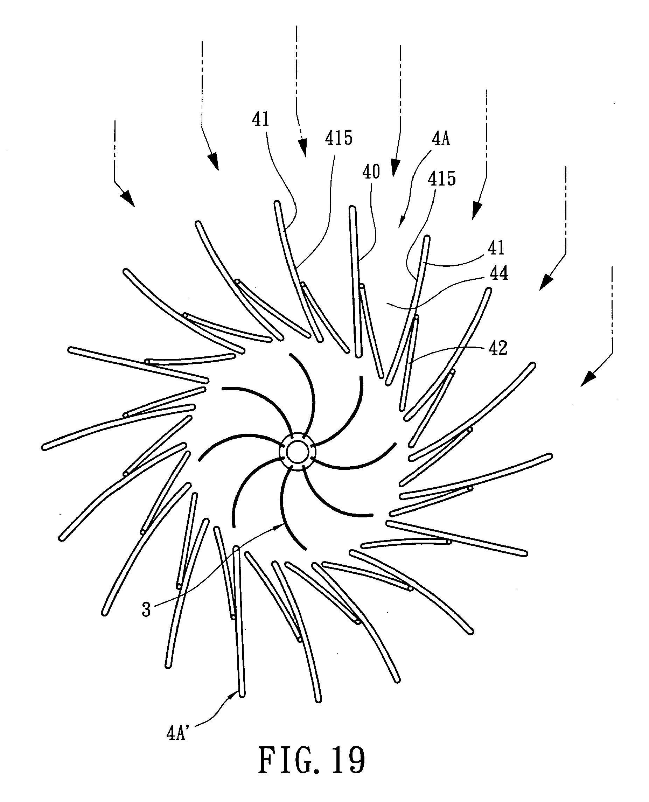

Fig. 19 shows the wind-guidance enhancing apparatus according to the fifth preferred embodiment of the present invention, which is designed for wide-area. The wind-guidance enhancing apparatus according to the tenth preferred embodiment of the present invention comprises a first wind-guidance set 4A and a second wind-guidance set 4A' around the impeller stage 3. The first wind-guidance set 4A and a second wind-guidance set 4A' have the same structure, therefore, only the first wind-guidance set 4A is described. The first wind-guidance set 4A comprises a flat or nearly-flat arc-shaped reference plate 40, a plurality of wind-guidance plates 41, a plurality of slightly-bent and movable wind-guidance gates 42, and a plurality of wind-guidance runners 44. The wind-guidance plates 41 are spaced on both sides of the reference plate 40 and slightly toward the first wind-guidance set 4A and the second wind-guidance set 4A'. The wind-guidance plate 41 comprises a concave face 415 facing the reference plate 40 and slightly facing outward. By the design of the concave face 415, the extent of capturing wind for the wind-guidance enhancing apparatus can be enhanced. The first wind-guidance set 4A and the second wind-guidance set 4A' are in wide area design in Fig. 191 to be described later. Each of the wind-guidance set 4A and 4A' comprises a reference plate 40, wind-guidance plates 41 spaced on both sides of the reference plate 40 and slightly toward the first wind-guidance set 4A and having 415 facing the reference plate 40 and slightly facing outward, a plurality of wind-guidance gates 42 spaced with the wind-guidance plates 41 and connected to the adjacent wind-guidance plate 41 at outer end thereof and having a wind-guidance face 424, a plurality of wind-guidance runners 44 defined by the wind-guidance face 424, reference plate 40, and adjacent wind-guidance plates 41, and shrunk toward the impeller stage 3. The wind-guidance runners 44 are such arranged that the reference plate 40, the wind-guidance plates 41 and the wind-guidance gates 42 are located at circular contour around the impeller stage 3. The wind-guidance runners 44 are arranged on support stage (not shown). The outlet of the wind-guidance runner 44 is preferably near the tangent line of the rotation of the blade 32. The wind-guidance plate 41 can be designed with slanting curved face (such as concave face 415) or slanting flat face.

In Fig. 19, there are two identical wind-guidance sets 4A and 4A' in circle arrangement around the impeller stage 3, which is not different to the first to ninth preferred embodiments. The wind in different flowing direction will be captured into the wind-guidance enhancing apparatus. When the capturing face of the impeller stage 3 faces wind in a specific direction, the extension direction of the reference plate 40 is aligned with the wind. The axial outer end of corresponding wind-guidance plate 41 is alone the wind to reduce wind flowing resistance. The axial outer ends between the wind-guidance plates 41 are maximized to achieve optimal capturing area. The shrinking end 441 of the wind-guidance runner 44 is similar to that of the basic type to optimally guide the wind toward the blade.

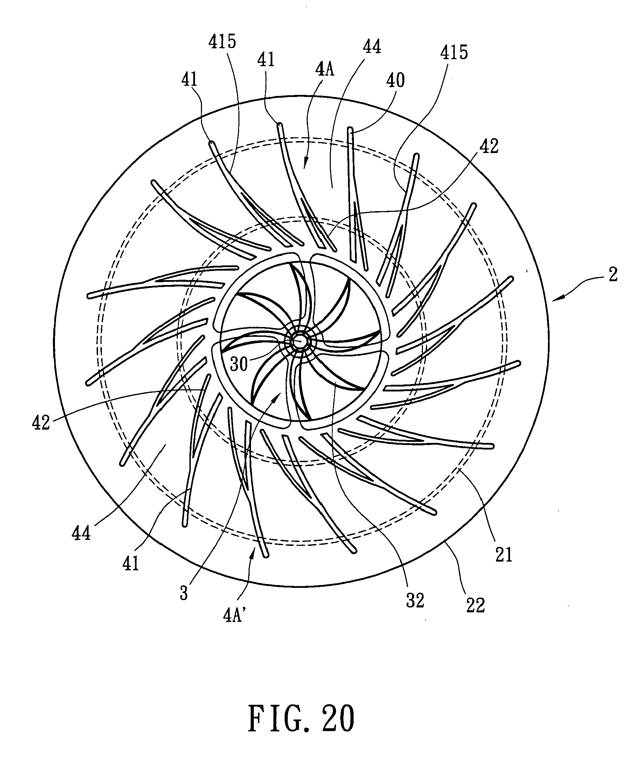

Fig. 20 shows the wind-guidance enhancing apparatus according to the twelfth preferred embodiment of the present invention, which is a mix of wide-area type and basic type. The wind-guidance enhancing apparatus according to the preferred embodiment also comprises a support stage 2, an impeller stage 3, and a first wind-guidance set 4A and a second wind-guidance set 4A'. The support stage 2 comprises a rotation stage 22 with the rotation shaft 30 as a pivot and upper and lower supports 21. The first wind-guidance set 4A and the second wind-guidance set 4A' are mounted on the rotation stage 22. The first wind-guidance set 4A is in wide-area design and comprises a reference plate 40 with flat shape or a nearly-flat curve shape, a plurality of wind-guidance plates 41 spaced on both sides of the reference plate 40 and each comprises a concave face 415 facing the reference plate 40. The first wind-guidance set 4A comprises a plurality of wind-guidance gates 42 slantingly extended toward the impeller stage 3, and a plurality of wind-guidance runners 44, wherein the wind-guidance gate 42 is integral with the wind-guidance plate 41. The second wind-guidance set 4A' is a basic design. In other word, the second wind-guidance set 4A' comprises a plurality of wind-guidance plates 41 bent toward the same direction, a plurality of wind-guidance gates 42 and wind-guidance runners 44 defined by the wind-guidance plates 41 and the wind-guidance gates 42. The rotation stage 22 drives the first wind-guidance set 4A and the second wind-guidance set 4A' to change the wind capturing angle according to wind flowing direction. The reference plate 40 of the first wind-guidance set 4A is at the optimal direction for the blade 32 to increase wind-capturing extent. The second wind-guidance set 4A' absorb the wind of the same flowing direction to the wind-guidance runner 44 to speed up the rotation speed of the blade 32.

As can be seen from above description, the wind-guidance runner 44 is shrunk from widen end 442 to shrinking end 441 and arranged along circumference around the impeller stage 3 in clockwise or counterclockwise direction to absorb wind in arbitrary directions. This design is not seen in prior art. Moreover, the provision of the wind-guidance unit 4, 4' and the first wind-guidance set 4A and the second wind-guidance set 4A' can provide optimal effect for wind ejection and enhance applicability of the wind-guidance enhancing apparatus according to the present invention. The first wind-guidance set 4A and the second wind-guidance set 4A' of wide-area type can provide pressure enhancement. The wind-guidance plates 41 with the concave face 415 have axial end with wide-area curving design toward outer side of the reference plate 40.

The wind capturing angle and wind-receiving face can be increased. The wind-guidance plates 41 with the concave face 415 can provide centrifugal effect when the resistance is reduced.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A wind-guidance enhancing apparatus for a wind power generator, comprising
a support stage 2;
an impeller stage 3 rotatably arranged on the support stage 2 and comprising at least one blade;
a wind-guidance unit 4 comprising a plurality of wind-guidance plates 41 arranged around a circular contour of the impeller stage 3 and having two wind-guidance faces 410, 411 and wind-guidance runners 44 defined between adjacent wind-guidance faces 410, 411.

2. The wind-guidance enhancing apparatus as in claim 1, wherein the wind-guidance runners 44 are shrunk toward the impeller stage 3 and outlets of the wind-guidance runners 44 are near tangent line of rotation of the impeller stage 3.

3. The wind-guidance enhancing apparatus as in claim 1, further comprising an adjusting mechanism 5 to adjust mounting angles of the wind-guidance plates 41.

4. The wind-guidance enhancing apparatus as in claim 1, wherein a cross-section of radial inner end of the wind-guidance plate 41 is smaller than a cross-section of radial outer end of the wind-guidance plate 41.

5. A wind-guidance enhancing apparatus for a wind power generator, comprising
a support stage 2;
an impeller stage 3 rotatably arranged on the support stage 2 and comprising at least one blade;
a first wind-guidance unit 4 comprising a plurality of wind-guidance plates 41 arranged around a circular contour of the impeller stage 3 and having a wind-guidance face, a plurality of wind-guidance gates 42 separated with the wind-guidance plates 41 and comprising a wind-guidance face, and wind-guidance runners 44 defined between adjacent wind-guidance faces 410, 411 and be shrunk toward the impeller stage 3;
wherein the wind outlet direction of the wind-guidance runner 44 are near tangent line of the blade to enhance wind pressure;
wherein one axial outer end of the wind-guidance gate 42 is arranged at a point between inner end and outer end of adjacent wind-guidance plate 41.

6. The wind-guidance enhancing apparatus as in claim 5, wherein the wind-guidance gate 42 is movable with respect to the wind-guidance plate 41 to adjust width of runner 44 outlet and flowing direction at runner 44 outlet.

7. The wind-guidance enhancing apparatus as in claim 5, wherein the support stage 2 comprises two supports 21, 21' separated to each other, each of the supports 21, 21' comprising a guiding hole 215, 217 , the wind-guidance plate 41 being fixed between the supports 21,21', the wind-guidance gates 42 being slidably arranged between the supports 21, 21', the wind-guidance gate 42 comprising axial outer end being movably arranged on the wind-guidance plate 41, sliding bolts 425, 426 being provided at axial inner end and axial outer end of the wind-guidance gates 42 and limited and slid in the guiding hole 215, 217 , an adjusting mechanism 5 for driving the sliding bolts 425, 426 to be away from or toward an axial inner end of the wind-guidance plate 41.

8. The wind-guidance enhancing apparatus as in claim 5, wherein the axial outer end of the wind-guidance gate 42 is pivotally arranged, the axial inner end of the wind-guidance gate 42 is away from or toward an inner end of the corresponding wind-guidance plate 41.

9. The wind-guidance enhancing apparatus as in claim 4, further comprising a second wind-guidance unit 4', and the first wind-guidance unit 4 and the second wind-guidance unit 4' are located at circumference of the same axis.

10. A wind-guidance enhancing apparatus for a wind power generator, comprising a support stage 2;
an impeller stage 3 rotatably arranged on the support stage 2 and comprising at least one blade;
a first wind-guidance set 4A, wherein the first wind-guidance set 4A comprises a reference plate 40, a plurality of wind-guidance plates 41 spaced on both sides of the reference plate 40 and slightly toward the first wind-guidance set 4A, wind-guidance gates 42 spaced with the wind-guidance plates 41 and connected to the adjacent wind-guidance plate 41 at outer end thereof and having a wind-guidance face 424, a plurality of wind-guidance runners 44 defined by the wind-guidance face, reference plate 40, and adjacent wind-guidance plates 41, and shrunk toward the impeller stage 3, the wind-guidance runners 44 being such arranged that the reference plate 40, the wind-guidance plates 41 and the wind-guidance gates 42 are located at circular contour around the impeller stage 3, the outlet of the wind-guidance runner 44 being near the tangent line of the rotation of the blade.

11. The wind-guidance enhancing apparatus as in claim 10, wherein the support stage 2 comprises two supports 21, 21' and a rotation stage 22 using a rotation axis as pivot and rotationally clockwise or counterclockwise between the supports 21, 21', wherein the first wind-guidance set 4A is arranged on the rotation stage 22.

12. The wind-guidance enhancing apparatus as in claim 10, wherein the support stage 2 comprises two separated supports 21,21' and a rotation stage 22 using a rotation axis as pivot and rotationally between the supports 21, 21' , the wind-guidance enhancing apparatus further comprising a second wind-guidance set 4A',
wherein the second wind-guidance set 4A' comprises
a plurality of wind-guidance plates 41 arranged around a circular contour of the impeller stage 3 and having a wind-guidance face 424 , a plurality of wind-guidance gates 42 separated with the wind-guidance plates 41 and comprising a wind-guidance face 424, and wind-guidance runners 44 defined between adjacent wind-guidance faces 424 and be shrunk toward the impeller stage 3; wherein the wind outlet direction of the wind-guidance runner 44 are near tangent line of the blade.
